# EUROPÄISCHE PATENTANMELDUNG

(11) **EP 0 862 846 A1**
(43) Veröffentlichungstag der Anmeldung: **09.09.1998**
(21) Anmeldenummer: 98104146.0
(22) Anmeldetag: 09.03.1998
(51) Int. Cl.: A01B 29/04

(54) **Walzenring**

(30) Priorität: 07.03.1997 DE 19709281
(71) Anmelder: Reitemeyer, Friedrich, 49744 Lähden (DE)
(72) Erfinder: Reitemeyer, Friedrich, 49744 Lähden (DE)
(74) Vertreter: Wurm, Maria Bernadette, Dr.

(57) **Zusammenfassung**

Die Erfindung betrifft einen Walzenring (2) zum Verdichten oder Krümeln von Böden mit einem scheiben- oder kreisringförmigen Grundkörper (4), der eine Umfangsfläche (10, 18) und eine zentrale Nabe (6) aufweist. Der Walzenring (2) weist auf der Umfangsfläche (10, 18) des Grundkörpers (4) eine Mehrzahl von Vorsprüngen (12) auf, die in einem Winkel α zwischen 15° und 80°, insbesondere zwischen 30° und 60° bezogen auf die äußere, tangentiale Umfangsfläche (10) des Grundkörpers (4) angeordnet ist. Erfindungsgemäß sind Abstreifer (11) an den Vorsprüngen (12) angeordnet, die sich von der äußeren Kante (15) der Abstreifer etwa radial zur Nabe des Walzenrings ausgerichtet bis zur Umfangsfläche (10, 18) erstrecken.

## Beschreibung

Die Erfindung betrifft einen Walzenring und eine Anordnung zum Verdichten oder Krümeln von Böden.

Zur Vorbereitung der Aussaat oder nach dem Säen muß der Boden eine vorgegebene Bodenstruktur bzw. eine optimale Dichte aufweisen, um dem Saatgut bestmögliche Keimbedingungen zu bieten. Das jeweils erforderliche Verdichten oder Krümeln des Bodens wird mit Walzen durchgeführt, die entweder eine Bodenverdichtung oder aber eine Lockerung des Bodens durch Krümeln bewirken. Das Verdichten erfolgt in den obersten Bodenschichten, um das Saatgut optimal im Boden zu verankern. Eine in die Tiefe des Bodens gerichtete Verdichtung ist nicht beabsichtigt. Die Walzen bestehen aus einer Vorrichtung zum Anhängen an ein Zugfahrzeug, die mit einer Achse versehen ist. Auf der Achse sind Walzenringe angeordnet, die für die eigentliche Bodenbearbeitung vorgesehen sind.

Es muß jeweils eine Walze zum Verdichten und eine zweite Walze zum Krümeln vorhanden sein, je nach dem, welches Getreide oder welche Feldfrucht angebaut werden soll. Das Vorhalten verschiedener Walzen ist kostenintensiv und erfordert viel Stellfläche. Das Wechseln der Walzen ist zeitraubend, da das Zugfahrzeug jeweils zum Stellplatz der Walzen zurückfahren muß.

Aus der US-Patentschrift 4,069,875 ist ein Walzenring, mit einem kreisringförmigen Grundkörper bekannt, der eine Umfangsfläche und eine zentrale Nabe aufweist, und der auf der Umfangsfläche mit einer Mehrzahl von Vorsprüngen versehen ist. Die Vorsprünge sind -bezogen auf die äußere, tangentiale Umfangsfläche des Grundkörpers in einem Winkel α, der zwischen 15° und 80° beträgt, angeordnet. Mit einem solchen Walzenring soll es möglich sein, je nach dem, in welche Richtung der Walzenring gedreht wird, Böden sowohl zu krümeln als auch zu verdichten.

In einer ersten Arbeitsrichtung trifft der Vorsprung -bezogen auf die Umfangsfläche des Grundkörpers- mit seiner Außenfläche auf den Boden und wirkt verdichtend. In einer zweiten Arbeitsrichtung trifft der Vorsprung -bezogen auf die Umfangsfläche des Grundkörpers- mit seiner Innenfläche nach Art eines Spatens auf den Boden und krümelt den Boden. Die Arbeitsrichtung kann gewechselt werden, indem der Walzenring umgedreht wird oder indem die Anhängevorrichtung der Walze umgelegt wird und das Zugfahrzeug die Anordnung in die entgegengesetzte Richtung zieht.

Praktische Versuche haben jedoch gezeigt, daß dieser Walzenring auf tiefen oder bindigen (feuchten oder nassen) Böden -und damit auf einem großen Teil der landwirtschaftlich genutzten Flächen- nicht einsetzbar ist. Beim Krümeln tiefer oder bindiger Böden wird Erde in den Innenraum des Walzenringes geschaufelt, so daß sich der Walzenring im Boden festgräbt. Beim Verdichten solcher Böden verkleben die Vorsprünge mit Erdreich und die gewünschte Wirkung bleibt aus.

Es ist Aufgabe der Erfindung, einen Walzenring bzw. eine Anordnung zum Verdichten oder Krümeln von Böden zu schaffen, die, anders als bisher bekannte Walzenringe, auch auf schwierigen Böden einsetzbar ist.

Die Aufgabe wird gelöst mit einem Walzenring mit den Merkmalen des Anspruchs 1 und mit einer Anordnung mit den Merkmalen des Anspruchs 10. Es hat sich überraschend herausgestellt, daß das Anordnen von Abstreifern, die sich etwa radial zur zentralen Nabe hin von der äußeren Kante der Vorsprünge Vorsprünge bis zur Umfangsfläche erstrecken, bewirkt, daß der Walzenring zum Verdichten und zum Krümeln auch von tiefen und bindigen Böden geeignet ist.

Es hat sich überraschend herausgestellt, daß die Walzenringe durch eine sehr einfache Maßnahme, nämlich das Anbringen von Abstreifern an den Vorsprüngen des Walzenringes, den Einsatz auch auf problematischen Böden einsetzbar sind. Die Abstreifer bewirken beim Krümeln, daß zähe, von allein kaum zerfallende Erdschollen geteilt werden. Die zerteilten, gekrümelten Schollen fallen dann -wie bei leichteren Böden- aus dem Walzenring heraus.

Beim Verdichten tiefer und bindiger Böden zeigt sich erstaunlicherweise, daß die Abstreifer auch bei dieser Arbeitsrichtung des Walzenringes ein Verkleben der Vorsprünge durch Erdschollen wirksam verhindern.

Ein Walzenring, dessen Vorsprünge in einem Winkel α zwischen 15° und 80° bezogen auf die äußere, tangentiale Umfangsfläche des Grundkörpers angeordnet sind, kann durch Umkehrung der Arbeitsrichtung sowohl zum Verdichten als auch zum Krümeln des Bodens eingesetzt werden. Besonders bevorzugt wird jedoch, die Vorsprünge in einem Winkel α zwischen 30° und 60° anzuordnen. In diesem Bereich wird wirksam verdichtet bzw. gekrümelt und die mit Abstreifern versehenen Vorsprünge neigen nicht dazu, sich zuzusetzen oder abzubrechen. Das Anbringen von Abstreifern beeinflußt in keiner Weise die Wahl des Winkels α für die Vorsprünge an der Umfangsfläche des Walzenringes.

Die vorstehende Beschreibung macht deutlich, daß durch einen Walzenring mit den Merkmalen des Anspruchs 1 eine Vorrichtung bereitgestellt wird, die sich zum Einsatz auf allen landwirtschaftlichen Böden eignet. Dies bedeutet eine erhebliche Erweiterung der Einsatzmöglichkeiten des Walzenringes und ein schnelleres Arbeiten, weil dieses häufig benutzte und vorteilhafte Gerät nunmehr ausnahmslos auf allen landwirtschaftlichen Böden einsetzbar ist.

Gemäß einer bevorzugten Ausführungsform der Erfindung sind die Vorsprünge und auch die Abstreifer in Arbeitsrichtung gesehen breiter als der Grundkörper. Dadurch wird eine verbesserte Verdichtung bzw. ein wirksameres Auflockern des Bodens erreicht. Außerdem wird die Arbeitsbreite der Walze bei gleichbleibender Anzahl der Walzenringe erhöht.

Die Vorsprünge können den Grundkörper in Arbeitsrichtung gesehen in etwa senkrecht zur Arbeitsrichtung entweder beidseitig überkragen oder sie können einseitig überstehen. Besonders wirksam ist ein Walzenring bzw. eine Anordnung, bei der die Vorsprünge auf der Umfangsfläche jeweils in eine Richtung über den Grundkörper hinausragen, wobei die Vorsprünge so angeordnet sind, daß sie jeweils alternierend in entgegengesetzte Richtungen überkragen.

Die Vorsprünge, und damit auch die Abstreifer, sind in der einfachsten Ausführungsform an einer Längskante mit dem Grundkörper verbunden. Aus Gründen der Stabilität wird jedoch bevorzugt, daß die Vorsprünge durch einen Steg mit dem Grundkörper verbunden sind. Der Steg kann je nach Anforderung an den Walzenring entweder im Bereich einer Außenkante des Vorsprungs oder aber mittig angeordnet sein. Der Steg ist vorzugsweise platten- oder winkelförmig ausgebildet. In einer bevorzugten Ausführungsform verbindet der Steg Vorsprung und Abstreifer mit dem Grundkörper.

Die Form und die Abmessung der Vorsprünge kann den jeweiligen Anforderungen an den Walzenring angepaßt werden. Möglich sind sowohl Arbeitsflächen, die in etwa rechteckig ausgebildet sind, aber auch dreieckige Arbeitsflächen können hergestellt werden. Die bevorzugten Abmessungen der Vorsprünge liegen bei ca. 6x8 cm. Je nach den Erfordernissen des Walzenringes oder des zu bearbeitenden Bodens können auch größere oder kleinere Vorsprünge verwendet werden. Die Abstreifer passen sich in der Kontur den Vorsprüngen an, sie ragen nicht über die Vorsprünge hinaus.

In einfacher Form bestehen die Vorsprünge, das heißt, die Arbeitsfläche, aus ebenem, plattenförmigem Metall. Bevorzugt wird jedoch, daß die Vorsprünge gebogen sind. Durch das Biegen wird beim Krümeln das Eindringen der Vorsprünge bzw. der Arbeitsfläche in den Boden erleichtert und beim Verdichten gleiten die Vorsprünge besser über die Erdschollen. Die Abstreifer sind vorzugsweise eben und etwa radial auf die Nabe ausgerichtet. Sie können jedoch -falls gewünscht-, ohne daß sich das Arbeitsergebnis verschlechtert, ebenfalls gebogen sein.

Die Stabilität des Walzenrings wird deutlich verbessert, wenn jeweils zwei Vorsprünge im Bereich des Grundkörpers durch ein Verbindungselement miteinander verbunden sind. Ein Abbrechen der Vorsprünge wird dadurch vermieden. Der Walzenring wird üblicherweise aus Metall gefertigt. Besonders bevorzugt wird ein Gußkörper, da dieser einfach und preiswert zu fertigen ist. Besonders bevorzugt wird die Fertigung des Walzenringes mit den Vorsprüngen und den Abstreifern in einem Schritt als ein Gußstück.

Der Durchmesser des Walzenrings ist von besonderer Bedeutung für ein wirksames Verdichten oder Krümeln des Bodens. Je größer der Durchmesser des Walzenrings, desto ungünstiger wird der Eindringwinkel, mit dem die Vorsprünge auf den Erdboden auftreffen. Vorteilhaft ist ein Durchmesser des Walzenrings von maximal 600 mm. Besonders bevorzugt wird jedoch ein geringerer Durchmesser, insbesondere ein Durchmesser von maximal 500 mm.

Die Erfindung betrifft weiter eine Anordnung zum Verdichten oder Krümeln des Bodens, die aus einem oder mehreren Walzenringen aufgebaut ist. Die Walzenringe sind auf einer Achse aufgereiht und die Achse ist mit einer Zugvorrichtung, die an ein Zugfahrzeug angehängt werden kann, verbunden. Diese Walzen-Anordnung ist in einer ersten Zugrichtung zum Verdichten von Böden nutzbar und in einer zweiten Zugrichtung, die der ersten Zugrichtung entgegengesetzt ist, zum Krümeln von Böden.

Die Zugrichtung kann entweder durch Umdrehen der Walzenringe auf der Achse oder durch Umsetzen des Zugfahrzeugs und Umlegen der Zugvorrichtung geändert werden.

Der erfindungsgemäße Walzenring wird nachstehend an einigen Ausführungsbeispielen unter Bezug auf die Zeichnungen im Detail erläutert. Dabei werden gleiche Details mit gleichen Bezugszeichen versehen. Es zeigen:
- Fig. 1a: eine schematische Darstellung des Walzenrings als Krümler;
- Fig. 1b: eine schematische Darstellung des Walzenrings als Verdichter;
- Fig. 2a-c: verschiedene Ausführungsformen von Vorsprüngen in der Aufsicht;
- Fig. 3: einen Ausschnitt aus einem Walzenring mit Details zur Anordnung eines Vorsprungs; und
- Fig. 4: einen teilweisen Schnitt durch einen Walzenring

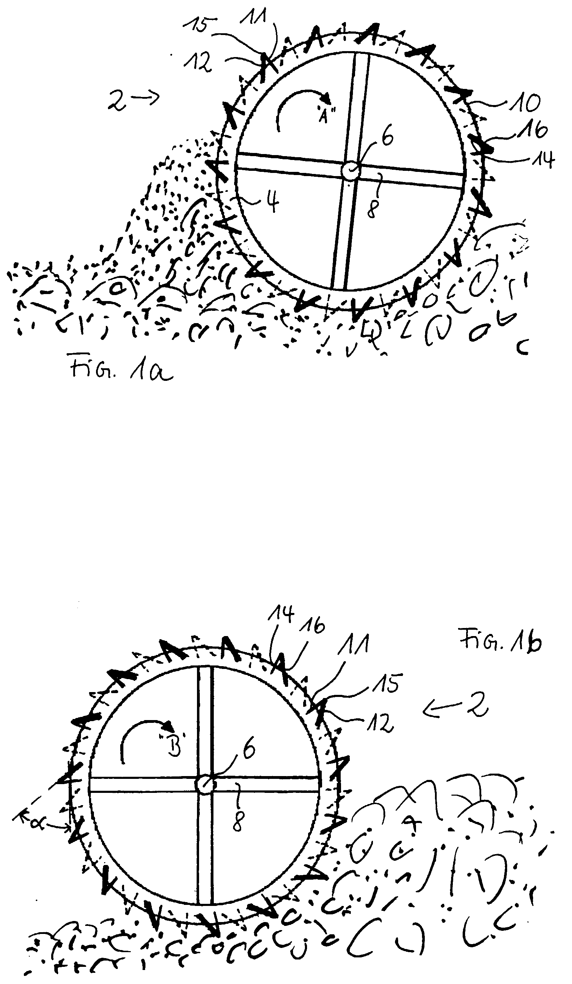

Fig. 1 a zeigt eine schematische Darstellung eines Walzenrings 2 als Krümler. Der Walzenring 2 besteht aus einem kreisringförmigen Grundkörper 4 und weist eine zentrale Nabe 6 auf. Der Walzenring hat einen Durchmesser von ca. 500 mm. Grundkörper 4 und Nabe 6 sind durch Speichen 8 miteinander verbunden. Von der Umfangsfläche 10 des Grundkörpers 4 aus erstrecken sich Vorsprünge 12 mit daran angeordneten Abstreifern 11. Die Anzahl der Vorsprünge 12 beträgt üblicherweise zwischen zwanzig und vierzig, beim vorliegenden Ausführungsbeispiel sind es dreißig. Die Vorsprünge 12 sind in einem Winkel α, der hier -bezogen auf die Umfangsfläche 10- ca. 35° beträgt, angeordnet. Die Abstreifer 11 sind mit der äußeren Kante 15 der Vorsprünge 12 verbunden und erstrecken sich etwa radial zur Nabe 6 gerichtet bis zur Umfangsfläche 10.

Der Walzenring 2 ist im Betrieb auf einer (hier nicht dargestellten) Achse angeordnet und wird mittels einer Anhängevorrichtung (ebenfalls nicht dargestellt) von einem Zugfahrzeug bewegt. In Arbeitsrichtung "A", angedeutet durch den Pfeil in Fig. 1a, graben sich die Vorsprünge 12 mit den daran angeordneten Abstreifern 11 in den Boden ein und die Erdschollen werden, so wie schematisch angedeutet, durch die Vorsprünge 12 und die Abstreifer 11 zerkleinert. Bei tiefen oder bindigen Böden werden Erdschollen wirksam durch das Einwirken der Abstreifer 11 zerteilt und die beim Zerteilen entstehenden Krümel fallen außerhalb des Walzenringes 2 zu Boden. Ein Verkleben der Erdschollen an bzw. zwischen den Vorsprüngen 12, vor allem an der Innenfläche 14, wird durch die Abstreifer 11 wirksam verhindert.

Wird, so wie in Fig. 1b dargestellt, derselbe Walzenring 2 umgedreht, so daß die Vorsprünge 12 und die daran angebrachten Abstreifer 11 in die entgegengesetzte Richtung weisen, und dementsprechend in die Arbeitsrichtung "B" bewegt, dann glättet die Außenfläche 16 der Vorsprünge 12 den Erdboden und wirkt verdichtend. Bei tiefen oder bindigen Böden verhindern die Abstreifer 11 ein Eindringen der Erdschollen in den Walzenring 2.

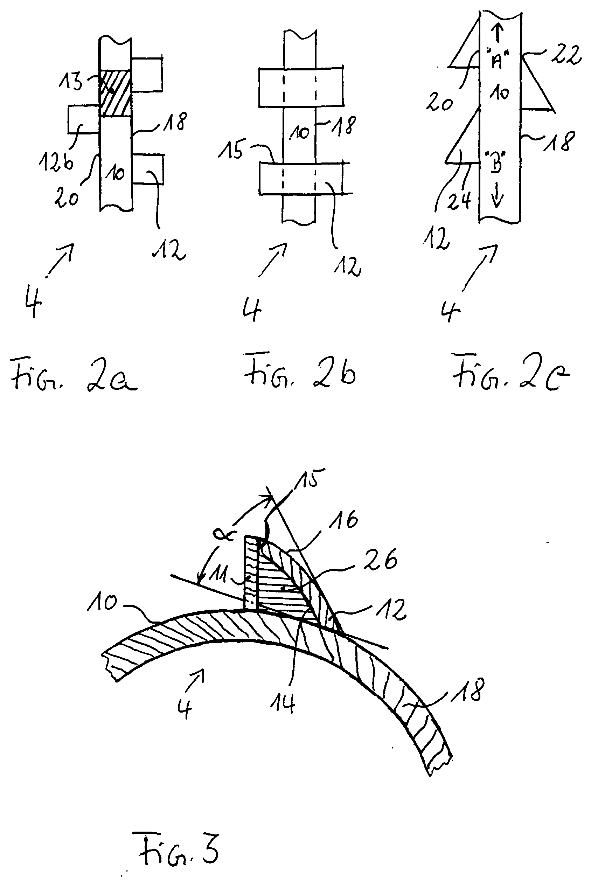

Fig. 2 a,b,c zeigen verschiedene Ausführungsformen von Vorsprüngen 12. In Fig. 2a ist ein Grundkörper 4 dargestellt, an dessen Umfangsfläche Vorsprünge 12 angeschweißt sind. Als Umfangsfläche werden hier insbesondere die äußere, tangentiale Umfangsfläche 10 aber auch die Seitenflächen 18 des Grundkörpers 4 bezeichnet. Die Vorsprünge 12 (und auch die in dieser Darstellung nicht sichtbaren Abstreifer) sind fest mit dem Grundkörper 4 verbunden. Sie sind beispielsweise angeschweißt, mit Bolzen oder Schrauben befestigt oder auch einstückig mit dem Grundkörper gegossen.

Die Vorsprünge 12 sind mit einer Längskante 20 an der Seitenfläche 18 angebracht (Fig. 2a, c). Sie können aber auch mit der äußeren, tangentialen Umfangsfläche 10 verbunden sein (Fig. 2b).

Die Vorsprünge 12 sind entweder von rechteckiger Form (Fig. 2a, b) oder sie sind dreieckig (Fig. 2c). Bei dreieckigen Vorsprüngen wird bevorzugt, daß die Spitze 22 beim Krümeln (Arbeitsrichtung "A") zuerst in den Boden eindringt, während beim Verdichten (Arbeitsrichtung "B") die breite Kante 24 zuerst auf den Erdboden trifft. Die Vorsprünge können je nach den Erfordernissen des zu bearbeitenden Bodens bzw. den Abmessungen des Walzenringes dimensioniert werden. Hier weisen sie Abmessungen von ca. sechs mal acht Zentimetern auf.

Besonders bevorzugt wird die in Fig. 2a abgebildete Ausführungsform. Die Vorsprünge 12 ragen bezogen auf die Arbeitsrichtung "A", "B" jeweils in etwa senkrechter Richtung über den Grundkörper 4 hinaus. Sie sind so angeordnet, daß aufeinanderfolgende Vorsprünge 12a, 12b jeweils in entgegengesetzte Richtungen ragen. Durch diese Anordnung wird die Arbeitsbreite des Walzenringes 2 maximiert bei gleichzeitig minimiertem Materialeinsatz am Walzenring.

Die in Fig. 2a dargestellten Vorsprünge 12a, 12b sind durch ein Verbindungselement 13 miteinander verbunden. Dieses Verbindungselement 13 trägt zusätzlich zur Stabilität des Walzenrings 2 bei.

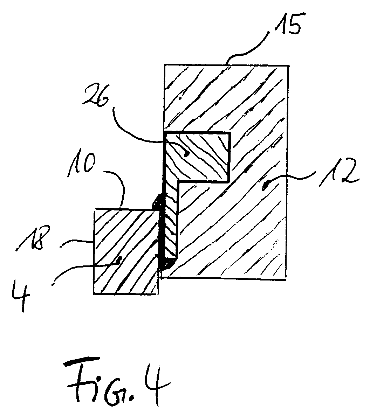

Die Vorsprünge 12 können, so wie in Fig. 1a, 1b gezeigt, aus geraden, plattenförmigen Elementen aufgebaut sein. Sie können aber auch, so wie in Fig. 3 dargestellt, gekrümmt sein. Die gekrümmte bzw. gebogene Ausführung der Vorsprünge 12 ist in der Anwendung kraftsparend und resultiert in geringerem Verschleiß des Walzenrings.

Die Vorsprünge 12 können entweder, so wie in Fig. 2a und 2c gezeigt, mit nur einer Längskante 20 mit dem Grundkörper 4 verbunden sein. Bevorzugt sind sie jedoch mit einem Steg 26 versehen, der den Vorsprung 12 abstützt. Der Steg 26 kann entweder, so wie in Fig. 3 dargestellt, aus einer einfachen Platte bestehen. Er kann aber auch winklig geformt sein, so wie in Fig. 4 gezeigt.

Die Vorsprünge 12 sind in einem Winkel α, der in Fig. 3 eingezeichnet ist, und der hier ca. 45° beträgt, am Grundkörper 4 angebracht. Ein zu spitzer Winkel α (unter 15°) bewirkt, daß die Vorsprünge 12 und die Abstreifer 11 dann kaum noch in das zu zerkrümelnde Erdreich eindringen. Ein zu offener Winkel α (über 80°) verschlechtert die verdichtende Wirkung des Walzenrings. Je größer der Durchmesser des Walzenrings ist, desto geringer fällt die verdichtende Wirkung aus. Die Abstreifer 11 sind an der Außenkante 15 der Vorsprünge 12 sowie am Grundkörper 4 befestigt. Sie erstrecken sich etwa radial zur (hier nicht dargestellten) Nabe 6, unabhängig davon, welchen Winkel α der jeweilige Vorsprung 12 einnimmt.

In dem besonders bevorzugten Bereich für den Winkel α zwischen 30° und 60° ist überdies die Befestigung der Vorsprünge 12 besonders einfach und stabil.

Die in den Fig. 1 bis 4 dargestellten Walzenringe sind aus Metall hergestellt. Sie bestehen aus Gußeisen. Andere Werkstoffe sind natürlich auch geeignet, sofern sie die nötige Festigkeit aufweisen, doch sind Gußwerkstoffe bei ausreichender Dimensionsgenauigkeit besonders preiswert. Es ist möglich, die Vorsprünge 12 und die Abstreifer 11 separat als Bauelemente herzustellen und am Grundkörper 4 anzubringen. Bevorzugt wird aber, Gruppen von Vorsprüngen 12 mit Abstreifern 11 und gegebenenfalls Stegen 26 als Bauteile herzustellen und dann am Grundkörper zu befestigen. Die Vorsprünge 12 sowie die Abstreifer 11 können ggf. einstückig zusammen mit den Stegen hergestellt werden. Alternativ wird der Walzenring mit den Vorsprüngen und -soweit vorhanden- mit den Stegen einstückig gegossen. Die Fertigung in einem Schritt ist besonders kostengünstig.

## Patentansprüche

1. Walzenring zum Verdichten oder Krümeln von Böden mit einem scheiben- oder kreisringförmigen Grundkörper (4), der eine Umfangsfläche (10, 18) und eine zentrale Nabe (6) sowie auf der Umfangsfläche (10, 18) des Grundkörpers (4) eine Mehrzahl von Vorsprüngen (12) aufweist, wobei die Vorsprünge (12) in einem Winkel α zwischen 15° und 80°, insbesondere zwischen 30° und 60° bezogen auf die äußere, tangentiale Umfangsfläche (10) des Grundkörpers (4) angebracht sind,
**dadurch gekennzeichnet, daß**
Abstreifer (11) an dem Walzenring angeordnet sind, die sich von der äußeren Kante (15) der Vorsprünge (12) bis zur Umfangsfläche (10, 18) erstrecken und die etwa radial zur zentralen Nabe (6) hin gerichtet sind.

2. Walzenring nach Anspruch 1, dadurch gekennzeichnet, daß die Vorsprünge (12) und/oder die Abstreifer (11) durch einen Steg (26) am Grundkörper (4) befestigt sind.

3. Walzenring nach einem der Ansprüche 1 oder 2, dadurch gekennzeichnet, daß etwa senkrecht zur Arbeitsrichtung (A, B) des Walzenrings (2) die Vorsprünge (12) und die Abstreifer (11) jeweils an einer Seite, vorzugsweise abwechselnd in entgegengesetzte Richtung über den Grundkörper (4) hinausragen.

4. Walzenring nach Anspruch 1 oder 2, dadurch gekennzeichnet, daß etwa senkrecht zur Arbeitsrichtung (A, B) des Walzenrings (2) die Vorsprünge (12) und die Abstreifer (11) breiter sind als der Grundkörper (4).

5. Walzenring nach einem der Ansprüche 1 bis 4, dadurch gekennzeichnet, daß die Vorsprünge (12) etwa rechteckig oder dreieckig sind.

6. Walzenring nach einem der Ansprüche 1 bis 5, dadurch gekennzeichnet, daß die Vorsprünge (12) entweder plattenförmig eben oder gebogen sind.

7. Walzenring nach einem der Ansprüche 1 bis 6, dadurch gekennzeichnet, daß mindestens zwei Vorsprünge (12a, 12b) im Bereich der Umfangsfläche (10, 18) des Grundkörpers (4) miteinander verbunden sind.

8. Walzenring nach einem der Ansprüche 1 bis 7, dadurch gekennzeichnet, daß der Walzenring (2) aus Gußeisen ist.

9. Walzenring nach einem der Ansprüche 1 bis 8, dadurch gekennzeichnet, daß der Durchmesser des Walzenrings maximal 600 mm, vorzugsweise maximal 500 mm beträgt.

10. Anordnung zum Verdichten oder Krümeln des Bodens, aufweisend einen oder mehrere Walzenringe (2) nach einem der Ansprüche 1 bis 9, eine Achse und eine Vorrichtung zum Anhängen der Anordnung an ein Zugfahrzeug, wobei der oder die Walzenringe (2) auf der Achse angeordnet sind und die Achse mit der Vorrichtung zum Anhängen der Achse verbunden ist.
